Europäisches Patentamt

**European Patent Office**

**Office européen des brevets**

(19)

(11) Numéro de publication: **0 203 861**
**B1**

(12) **FASCICULE DE BREVET EUROPÉEN**

(45) Date de publication du fascicule du brevet:
**10.08.88**

(51) Int. Cl.⁴: **B 01 D 13/00,** G 21 C 19/30

(21) Numéro de dépôt: **86401097.0**

(22) Date de dépôt: **23.05.86**

(54) **Dispositif modulaire d'ultrafiltration du liquide de refroidissement d'un réacteur nucléaire.**

(30) Priorité: **29.05.85 FR 8508055**

(43) Date de publication de la demande:
**03.12.86 Bulletin 86/49**

(45) Mention de la délivrance du brevet:
**10.08.88 Bulletin 88/32**

(84) Etats contractants désignés:
**BE CH DE GB IT LI SE**

(56) Documents cité:
**DE-A-2 700 966**
**FR-A-1 211 614**
**FR-A-1 259 400**
**FR-A-2 463 970**
**FR-A-2 552 419**

(73) Titulaire: **FRAMATOME, Tour Fiat 1 place de la Coupole, F-92400 Courbevoie (FR)**

(72) Inventeur: **Dagard, Philippe, 20 Avenue de l'Europe, F-78160 Marly Le Roi (FR)**
Inventeur: **Rivière, Jacques, 2 Allée Ile Marante, F-92700 Colombes (FR)**

(74) Mandataire: **Polus, Camille, c/o Cabinet Lavoix 2, Place d'Estienne d'Orves, F-75441 Paris Cedex 09 (FR)**

## Description

L'invention concerne un dispositif modulaire d'ultrafiltration du liquide de refroidissement a haute température et à haute pression d'un réacteur nucléaire.

Les réacteurs nucléaires à eau sous pression comportent un circuit primaire dans lequel circule l'eau sous pression de refroidissement des assemblages combustibles du coeur du réacteur. Le circuit primaire est en communication avec le volume interne de la cuve renfermant le coeur et comporte des pompes de circulation du fluide primaire, des généateurs de vapeur et un pressuriseur reliés par des canalisations de grand diamètre et résistant à la pression. Le fluide primaire du réacteur peut être également mis en circulation dans certains circuits auxiliaires permettant son traitement et la modification de ses caractéristiques physiques ou chimiques.

Pendant sa circulation dans le circuit primaire ou dans les circuits auxiliaires, le fluide de refroidissement vient en contact avec de nombreux composants qui sont pour la plupart réalisés ou revêtus avec un alliage de nickel qui permet de limiter l'attaque par le fluide primaire. Cependant certains composants comme les sièges de vannes ou de robinets ou même certaines portions de tuyauteries connaissent une certaine usure si bien que le fluide primaire se charge en particules de très petite dimension arrachées à ces composants. Ces particules sont amenées à circuler avec le fluide primaire et donc à traverser le coeur du réacteur où elles sont soumises à un bombardement neutronique intense qui a pour effet de les activer. En particulier, les alliages résistant à l'usure qui renferment une certaine proportion de cobalt sont la cause de l'apparition de particules fortement activées. Ces particules s'accumulent dans certaines parties des composants du réacteur ce qui pose des problèmes très difficiles à résoudre au cours des opérations de maintenance du réacteur, ces opérations nécessitant des phases préalables de décontamination très difficiles à mettre en oeuvre.

D'autre part, l'eau d'appoint et les additifs introduits dans le fluide primaire grâce à un circuit auxiliaire tel que le circuit de contrôle volumétrique et chimique contiennent également des particules solides d'origines diverses qui sont activées lorsque le fluide primaire traverse le coeur du réacteur.

Il est donc nécessaire de traiter le fluide primaire périodiquement ou en continu pour abaisser la teneur en particules activées ou activables dans ce fluide primaire. Ces particules ont un diamètre moyen de 0,5 micromètre avec une proportion notable de particules d'un diamètre de l'ordre de 0,1 micromètre. Ces particules peuvent également se présenter sous forme colloïdale c'est-à-dire sous la forme d'un gel non cristallisé.

L'épuration du fluide doit donc être réalisée par un procédé tel que l'ultrafiltration et plus particulièrement par ultrafiltration à chaud, puisque la solubilité des produits polluants est plus forte à froid qu'à chaud.

On a donc envisagé d'utiliser des procédés d'ultrafiltration à chaud sur le fluide primaire à sa température et à sa pression de service dans le réacteur, pour assurer son épuration pendant le fonctionnement du réacteur. Un tel procédé a été décrit dans le brevet francais n° 83-15130 (correspondant à EP-A-0 145 519; priorité: 23.09.73; date de publication de la demande 19.06.75) au nom de la Société FRAMATOME. On a également décrit, dans cette demande de brevet, un dispositif d'ultrafiltration qui peut être intercalé sur la circulation du fluide primaire, à l'intérieur de l'enceinte de sécurité du réacteur. Un tel dispositif d'ultrafiltration qui est traversé par un fluide à une température voisine de 320°C et à une pression de l'ordre de 155.10⁵ Pa comporte une enveloppe résistant à la pression de très forte épaisseur en un matériau résistant à l'action corrosive du fluide primaire et de ses additifs. Cependant, un tel ultrafiltre est conçu sous forme monobloc, la paroi d'ultrafiltration étant constituée par des tubes fixés à leurs extrémités sur des plaques tubulaires elles-mêmes soudées sur l'enveloppe résistant à la pression de l'ultrafiltre. Il en résulte des difficultés pour assurer l'entretien et la réparation du filtre, par exemple lorsque les tubes constituant la paroi d'ultrafiltration sont colmatés ou détériorés.

D'autre part, l'installation de l'ultrafiltre dans l'enceinte de sécurité du réacteur renfermant le circuit primaire et son branchement en dérivation sur le circuit primaire ou sur un circuit auxiliaire du réacteur nécessite des opérations complexes et modifie le programme de construction du réacteur nucléaire. De même, le remplacement de l'ultrafiltre d'un réacteur ayant fonctionné nécessite des opérations longues et délicates aussi bien lors du démontage du filtre à remplacer dont les matériaux sont activés que lors du montage du filtre neuf.

Ces opérations sont d'autant plus complexes que l'ultrafiltre est intercalé sur un circuit d'ultrafiltration comportant des composant tels que des pompes, des échangeurs de chaleur, des dépressuriseurs et des vannes. Ces composants, ainsi que les tuyauteries de jonction doivent être calorifugés soigneusment et placés dans des espaces protégés à l'intérieur de l'enceinte de sécurité, puisqu'ils sont destinés à recevoir un liquide à très haute température et à très haute pression transportant des particules activées. En particulier, la partie du circuit d'ultrafiltration recevant le concentrat qui comporte généralement une pompe et un échangeur de chaleur pour le refroidissement du concentrat requiert de grandes précautions en ce qui concerne sa conception et son montage.

Le but de l'invention est donc de proposer un dispositif modulaire d'ultrafiltration du liquide de refroidissement à haute température et à haute pression d'un réacteur nucléaire qui puisse être monté et démonté facilement, qui présente une très bonne protection thermique et biologique et qui permette un entretien facilité de sa partie d'ultrafiltration proprement dite.

Dans ce but, le dispositif d'ultrafiltration suivant l'invention comporte:

- une enceinte dont les parois de grande épaisseur sont en un matériau absorbant les radiations comportant un couvercle amovible,

- un ultrafiltre placé à l'intérieur de l'enceinte et comportant une enveloppe résistant à la pression ouverte à l'une de ses extrémités munie d'une bride de raccordement et renfermant un ensemble d'ultrafiltration amovible qui peut être introduit ou enlevé par l'ouverture de l'enveloppe ainsi qu'une tubulure d'entrée de liquide à épurer, une tubulure de sortie de filtrat et une tubulure de sortie de concentrat traversant l'enveloppe résistant à la pression,

- une pompe de circulation du concentrat fixée sur le couvercle amovible de l'enceinte et comportant une bride de raccordement complémentaire de la bride de raccordement de l'enveloppe résistant à la pression, pour constituer avec cette enveloppe, lorsque le couvercle amovible et la pompe sont en position de service, un volume fermé et étanche dans lequel le concentrat est mis en circulation par la pompe.

- un échangeur de chaleur placé dans l'enceinte et relié à la tubulure de sortie du concentrat qui pénètre dans l'échangeur de chaleur assurant son refroidissement, ainsi qu'à une tubulure d'évacuation du concentrat refroidi, à une tubulure d'entrée et à une tubulure de sortie de fluide de refroidissement,

- des moyens de raccordement fixés respectivement sur la tubulure d'entrée du liquide à épurer, sur la tubulure de sortie du filtrat, sur la tubulure d'évacuation de concentrat et sur les tubulures d'entrée et de sortie du fluide de refroidissement, à l'extérieur de l'enceinte, ces tubulures traversant la paroi de l'enceinte de façon étanche,

- et un matériau calorifuge sous forme divisée remplissant le volume libre de l'enceinte.

Afin de bien faire comprendre l'invention, on va maintenant décrire, à titre d'exemple non limitatif, un mode de réalisation d'un dispositif modulaire d'ultrafiltration de l'eau de refroidissement d'un réacteur nucléaire à eau sous pression.

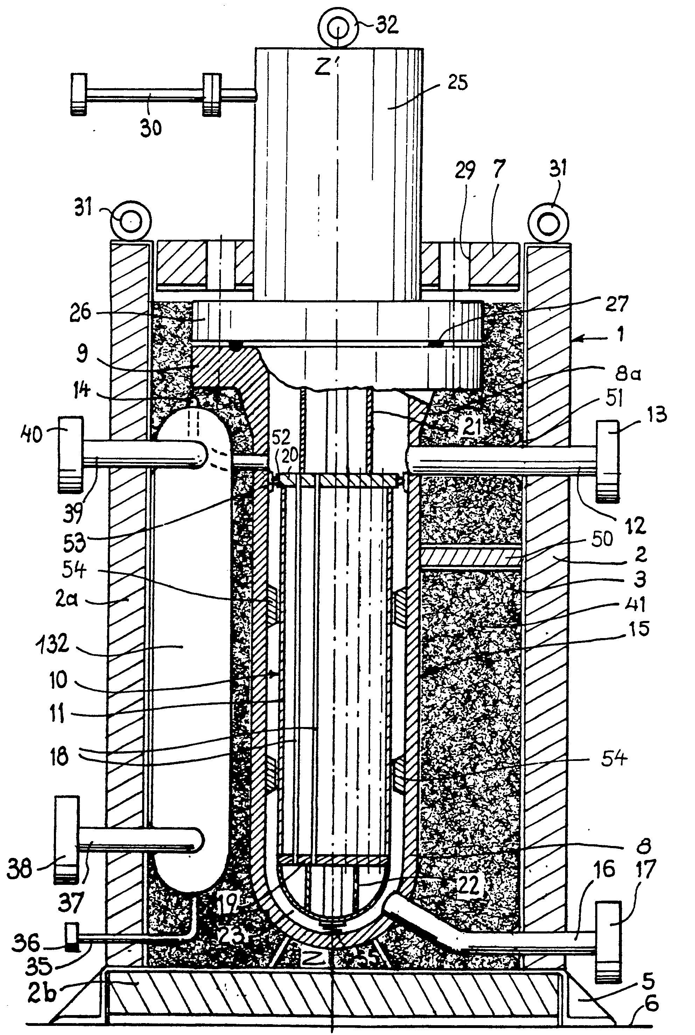

La figure unique est une vue en coupe par un plan vertical du dispositif modulaire d'ultrafiltration suivant l'invention.

Sur la figure unique, on voit l'enceinte 1 du dispositif modulaire constitué par des parois 2 de forte épaisseur en plomb revêtues, sur leurs faces intérieures , par une tôle d'acier 3. L'enceinte 1 comporte une paroi latérale 2a et un fond 2b reliés entre eux de façon à constituer un puits d'axe vertical ZZ' dont le fond est fermé de façon étanche par les tôles de revêtement 3 des parois 2a et 2b. Des cornières 5 renforcées sont fixées sur les bords du fond 2b pour constituer les supports du dispositif modulaire d'ultrafiltration, ces cornières sont percées de trous permettant la fixation du dispositif par des vis sur une surface de support 6.

L'ouverture de l'enceinte 1 placée à sa partie supérieure est fermée par un couvercle 7.

A l'intérieur de l'enceinte 1, l'ultrafiltre 15 est maintenu grâce à un ensemble de poutres 50 disposées radialement et fixées d'une part sur la paroi extérieure de l'enveloppe 8 de l'ultrafiltre et d'autre part sur la tôle d'acier 3 revêtant intérieurement l'enceinte 1; ces poutres sont dimensionnées pour permettre la reprise d'efforts tels que ceux engendrés par une secousse sismique ou lors d'un accident d'un type quelconque. L'enveloppe 8 symétrique de révolution, placée dans l'enceinte 1 avec son axe confondu avec l'axe ZZ' comporte une partie centrale cylindrique, solidaire d'une bride de raccordement 9 de forte épaisseur et un fond bombé. L'enveloppe 8 renferme un ensemble d'ultrafiltration 10 qui peut être introduit dans cette enceinte 8 ou enlevé par son ouverture supérieure 8a. Trois tubulures traversent la paroi de l'enveloppe 8; une tubulure 12 d'entrée d'eau à épurer et une tubulure 14 de sortie de concentrat, à la partie supérieure de l'enveloppe et une tubulure 16 de sortie de filtrat à la partie inférieure de l'enveloppe 8. Les tubulures 12 et 16 traversent la paroi latérale 2a de l'enceinte 1, de façon étanche grâce à une membrane métallique 51 soudée d'une part à la paroi intérieure de l'enceinte et d'autre part à la tubulure correspondante et sont solidaires, à l'extérieur de l'enceinte 1, de moyens (brides) de raccordement 13 et 17 respectivement.

On va décrire brièvement l'ensemble d'ultrafiltration 10 et sa disposition à l'intérieur de l'enveloppe 8, l'ultrafiltre 15 constitué par l'enveloppe 8, ses tubulures de jonction et les éléments disposés à l'intérieur de l'enveloppe 8 étant d'un type nouveau décrit dans une demande de brevet déposée le même jour que la présente demande (EP-A- 0 203 862; priorité: 29.05.75; date de publication de la demande: 03.12.86).

L'ensemble d'ultrafiltration 10 est constitué par une enveloppe 11 cylindrique à fond bombé à l'intérieur de laquelle est placée la paroi d'ultrafiltration constituée par un ensemble de tubes verticaux 18 dont les extrémités sont fixées à l'intérieur de deux plaques tubulaires respectives 19 et 20.

La plaque tubulaire supérieure 20 est usinée sur sa partie périphérique, pour constituer une gorge recevant un joint torique 52 coopérant avec une portée de joint 53 rapportée sur la surface interne de l'enveloppe 8. Des pièces de centrage 54 solidaires de la surface interne de l'enveloppe 8 assurent le maintien transversal de l'enveloppe 11. Le fond bombé de l'enveloppe 11 est en appui, par l'intermédiaire d'un ressort 55, sur le fond de l'enveloppe 8.

Au-dessus de la plaque 20 est disposé un cloisonnement 21 permettant de délimiter plusieurs compartiments dans le volume intérieur de l'enveloppe 8, au-dessus de la plaque 20. De la même façon, un cloisonnement 22 permet de délimiter plusieurs compartiments dans la partie de l'enveloppe 11 située en-dessous de la plaque tubulaire 19.

Le fonctionnement de l'ultrafiltre 15 est le suivant l'eau à épurer est introduite dans l'enveloppe 8 par la tubulure 12, à l'intérieur d'un des compartiments délimités par le cloisonnement 21. L'eau à épurer pénètre dans les tubes d'ultrafiltration puis circule dans un sens puis dans l'autre à l'intérieur de ces tubes 18, grâce à la disposition relative des cloisonnements 21 et 22. Le liquide circulant dans les tubes 18 constitue le concentrat dont la teneur en impuretés augmente, du filtrat constitué par de l'eau pure traversant les parois des tubes pour venir dans le volume intérieur de l'enveloppe 11, entre les plaques tubulaires 19 et 20. Un cloisonnement non représenté permet également la circulation du filtrat dans cet espace de l'ensemble d'ultrafiltration. Le dernier compartiment sur la circulation du filtrat est en communication par une ouverture traversant l'enveloppe 11, avec l'espace ménagé entre les enveloppes 8 et 11. Le filtrat est évacué par la tubulure 16 qui communique avec cet espace.

Le dernier compartiment situé sur la circulation du concentrat et au-dessus de la plaque 20 est en communication avec la tubulure de sortie du concentrat 14.

Une pompe 25 de circulation de l'eau à épurer et du concentrat est fixée sur le couvercle amovible 7 de l'enceinte 1. Cette pompe comporte une bride de raccordement 26 complémentaire de la bride 9 de l'ultrafiltre 15. Les brides 9 et 26 comportent des trous pour le passage de boulons ou de vis de fixation dans des positions correspondantes. Un joint d'étanchéité 27 est intercalé au montage entre les deux brides si bien que la pompe 25 et sa bride 26 assurent la fermeture étanche de la partie supérieure de l'enveloppe 8. Le pompage et la circulation du concentrat sont assurés par la pompe 25 dont les jonctions nécessaires sont prévues avec les compartiments correspondants délimités par le cloisonnement 21.

Des trous 29 traversent le couvercle 7 au droit des vis de fixation des brides 9 et 26 pour permettre le montage et le démontage de ces brides. La pompe 25 est refroidie par un fluide de refroidissement pénétrant dans le carter de la pompe par une canalisation 30. Des anneaux de levage 31 et 32 respectivement sont fixés sur l'enceinte 1 et sur la pompe 25, permettant soit par les anneaux 31 le transport de l'ensemble moulé soit par 32 le transport de la pompe 25 et l'accès au faisceau.

A l'intérieur de l'enceinte 1 est monté un échangeur de chaleur 132 cylindrique à fond bombé permettant le refroidissement du concentrat. La tubulure de sortie 14 du concentrat pénètre de façon étanche à l'intérieur de l'enveloppe de l'échangeur de chaleur 132 où elle est reliée à un tube d'échange dont l'autre extrémité est reliée à une tubulure 35 d'évacuation du concentrat. La tubulure 35 traverse l'enceinte 1 pour être reliée à l'extérieur de cette enceinte 1 à une bride de raccordement 36. Du fluide de refroidissement est introduit dans l'enveloppe de l'échangeur 132 par une tubulure 37 et récupéré par une tubulure 39, les tubulures 37 et 39 traversant de façon étanche, grâce à des membranes d'étanchéité soudées 51, la paroi latérale 2a de l'enceinte 1 pour être reliées à l'extérieur de cette enceinte, à des brides de raccordement 38 et 40 respectivement.

Un matériau calorifuge sous forme divisée 41 remplit le volume libre de l'enceinte 1, à l'extérieur des éléments contenus par cette enceinte 1.

Le dispositif modulaire d'ultrafiltration qui vient d'être décrit peut être très facilement monté à l'intérieur de l'enceinte de sécurité d'un réacteur nucléaire, par exemple pour être placé sur une boucle d'ultrafiltration placée en dérivation sur un circuit auxiliaire de traitement du fluide primaire, pour constituer un circuit d'ultrafiltration d'une structure nouvelle tel que décrit dans une demande de brevet déposée le même jour que la présente demande (EP-A- 0 203 860; priorité: 24.05.85; date de publication de la demande: 03.12.86). Il suffit en effet de venir placer à l'endroit voulu, le dispositif modulaire d'ultrafiltration, grâce à un moyen de levage accroché aux anneaux 31. Le module est ensuite fixé en place par l'intermédiaire de ses supports 5. On effectue alors le raccordement des tubulures aux tuyauteries correspondantes maintenues en attente, grâce aux brides de raccordement correspondantes. Le module monté comme représenté sur la figure comporte tous les éléments actifs nécessaires de la boucle d'ultrafiltration et peut être relié au circuit auxiliaire de traitement du fluide primaire par des éléments passifs uniquement. Il est bien évident que le démontage du dispositif modulaire peut être effectué de façon très simple et très rapide, l'ensemble du module fournissant une protection biologique grâce aux parois de plomb 2 de forte épaisseur.

De plus, le dispositif modulaire présente en lui-même une bonne isolation thermique de ses éléments dans lesquels circule l'eau primaire, grâce au matériau sous forme divisée 41.

L'un des avantages essentiels du dispositif modulaire suivant l'invention est d'autre part qu'il permet une séparation et une extraction aisée de l'ensemble d'ultrafiltration, pour son entretien, pour sa réparation ou pour le remplacement de sa paroi tubulaire d'ultrafiltration. Il suffit en effet pour cela de séparer les brides 9 et 26 depuis l'extérieur de l'enceinte 1 puis de soulever le couvercle 7 et la bride 26 par l'intermédiaire de l'anneau 32 de la pompe 25, pour accéder à la partie intérieure de l'enveloppe 8 comportant le cloisonnement 21 et l'ensemble d'ultrafiltration 10. Le filtre peut être remonté, par exemple après le remplacement de l'ensemble d'ultrafiltration 10, de façon très facile et très rapide, par des opérations inverses des opérations de démontage.

L'invention ne se limite pas au mode de réalisation qui a été décrit. On peut réaliser l'enceinte à paroi épaisse sous une forme différente et placer les composants constituant le module dans des dispositions respectives différentes.

On peut par exemple inverser totalement la disposition de l'ultrafiltre 15, le liquide à épurer arrivant à sa partie inférieure et le filtrat étant évacué à sa partie supérieure.

Enfin, le dispositif modulaire d'ultrafiltration suivant l'invention peut être utilisé dans tout · réacteur nucléaire dont le liquide de refroidissement est à haute température et à haute pression.

**Revendications**

1. Dispositif modulaire d'ultrafiltration du liquide de refroidissement à haute température et à haute pression d'un réacteur nucléaire caractérisé par le fait qu'il comporte:
   - une enceinte 111 dont les parois (2) sont en un matériau absorbant les radiations comportant un couvercle (7) amovible,
   - un ultrafiltre (15) placé à l'intérieur de l'enceinte (1) et comportant une enveloppe (8) résistant à la pression ouverte à l'une de ses extrémités (8a) munie d'une bride de raccordement (9) et renfermant un ensemble d'ultrafiltration (10) amovible qui peut être introduit ou enlevé par l'ouverture de l'enveloppe (8) ainsi qu'une tubulure d'entrée (12) de liquide à épurer, une tubulure de sortie (16) de filtrat et une tubulure (14) de sortie de concentrat traversant l'enveloppe (8) résistant à la pression,
   - une pompe de circulation (25) du concentrat fixée sur le couvercle (7) amovible de l'enceinte (1) et comportant une bride de raccordement (26) complémentaire de la bride de raccordement (9) de l'enveloppe (8) résistant à la pression, pour constituer avec cette enveloppe (8), lorsque le couvercle amovible (7) et la pompe (25) sont en position de service, un volume fermé et étanche dans lequel le concentrat est mis en circulation par la pompe (25),
   - un echangeur de chaleur (132) placé dans l'enceinte (1) et relié à la tubulure de sortie (14) du concentrat qui pénètre dans l'échangeur de chaleur (132) assurant son refroidissement, ainsi qu'à une tubulure (35) d'évacuation du concentrat refroidi, à une tubulure d'entrée (37) et à une tubulure de sortie (39) de fluide de refroidissement,
   - des moyens de raccordement (13, 17, 36, 38, 40) fixés respectivement sur la tubulure (12) d'entrée de liquide à épurer, sur la tubulure (16) de sortie du filtrat, sur la tubulure (35) d'évacuation de concentrat et sur les tubulures (37, 39) d'entrée et de sortie de fluide de refroidissement, à l'extérieur de l'enceinte (1), ces tubulures traversant les parois (2) de l'enceinte de façon étanche,
   - et un matériau calorifuge (41) sous forme divisée remplissant le volume libre de l'enceinte (1):

2. Dispositif modulaire suivant la revendication 1 caractérisé par le fait que des poutres (20) sont disposées radialement entre l'enveloppe (8) de l'ultrafiltre (15) et la paroi interne de l'enceinte (1) pour la reprise des efforts pouvant apparaître dans des conditions accidentelles.

3. Dispositif modulaire suivant l'une quelconque des revendications 1 et 2, caractérisé par le fait que l'enveloppe (8) de l'ultrafiltre (15) est de forme globalement cylindrique à axe vertical ZZ' et ouverte à sa partie supérieure.

4. Dispositif modulaire suivant la revendication 3 caractérisé par le fait que la pompe (25) comporte un anneau de levage (32) pour le levage ou la dépose de l'ensemble reposant sur la bride (9) de l'enveloppe (8) de l'ultrafiltre (15).

5. Dispositif modulaire suivant l'une quelconque des revendications 3 et 4 caractérisé par le fait que le couvercle amovible (7) de l'enceinte (1) comporte des trous (29) à la verticale de moyens de fixation des brides (26 et 9) l'une par rapport a l'autre.

6. Dispositif modulaire suivant la revendication 1 caractérisé par le fait que l'enceinte (1) comporte des anneaux de levage (31) pour son transport et sa mise en place dans le réacteur dans son ensemble.

7. Dispositif modulaire suivant la revendication 1 caractérisé par le fait que l'ultrafiltre (15) comporte des cloisonnements (21, 22) de guidage du concentrat et du filtrat à l'intérieur de l'enveloppe (8) et à l'intérieur de l'ensemble d'ultrafiltration (10) respectivement.

**Patentansprüche**

1. Modulare Ultrafiltrationsvorrichtung für die heiße und unter hohem Druck stehende Kühlflüssigkeit eines Kernreaktors gekennzeichnet durch
   - einen Behälter (1) dessen Wandungen (2) aus einem strahlenabsorbierenden Material bestehen und der einen abnehmbaren Deckel (7) aufweist,
   - einen Ultrafilter (15) der im Inneren des Behälters (1) angeordnet ist und eine gegen Druck widerstehende Hülle (8) aufweist, die an einem ihrer Enden (8a) offen ist und mit einem Verbindungsflansch (9) versehen ist, die ferner eine herausnehmbare Ultrafiltrationseinheit (10) umgibt, die durch die Öffnung der Hülle (8) herausgenommen oder in diese eingeführt werden kann sowie mit einem Einführungsrohrsystem (12) für die zu filternde Flüssigkeit, einem Ableitungsrohrsystem (16) für das Filtrat und einem Ausgangsrohrsystem (14) für das Konzentrat, das die Druckhülle (8) durchquert,
- eine Umlaufpumpe (25) für das Konzentrat, die am abnehmbaren Deckel (7) des Behälters (1) befestigt ist und einen komplementär zu dem Verbindungsflansch (9) der Druckhülle (8) ausgebildeten Verbindungsflansch (26) aufweist um mit dieser Druckhülle (8) ein geschlossenes und dichtes Volumen zu bilden, wenn der abnehmbare Deckel (7) und die Pumpe (25) in Betriebsstellung sind, indem das Konzentrat durch die Pumpe (25) zur Zirkulation gebracht wird,
- einen Wärmetauscher (132), der in dem Behälter (1) angeordnet und an das Ausgangsleitungssystem (14) für das Konzentrat angeschlossen ist, das in den Wärmetauscher (132) eingeleitet wird und dessen Abkühlung bewirkt, sowie an ein Abführleitungssystem (35) für das abgekühlte Konzentrat, an ein Eingangsleitungssystem (37) und an ein Ausgangsleitungssystem (39) für das Kühlfluid,
- Verbindungsorgange (13, 17, 36, 38, 40), die jeweils auf dem Eingangsleitungssystem (12) der zu filternden Flüssigkeit, auf dem Ausgangsleitungssystem (16) des Filtrats, auf dem Abführleitungssystem (35) des Konzentrats und auf dem Eingangs- und Ausgangsleitungssystem (37, 39) des Kühlmittelfluids, außerhalb des Behälters (1) befestigt sind, wobei diese Rohrleitungssysteme die Wandungen (2) des Behälters abgedichtet durchqueren, und
- ein Wärmedämmaterial (41), das in verteilter Form das freie Volumen des Behälters (1) ausfüllt.

2. Modulare Ultrafiltrationsvorrichtung nach Anspruch 1,
dadurch gekennzeichnet, daß Stützträger (50) radial zwischen der Hülle (8) des Ultrafilters (15) und der Innenwandung der Hülle (1) angeordnet sind um die Kräfte aufzunehmen, die in Störungsfällen auftreten können.

3. Modulare Ultrafiltrationsvorrichtung nach einem der Ansprüche 1 und 2,
dadurch gekennzeichnet, daß die Hülle (8) des Ultrafilters (15) im wesentlichen zylinderförmig mit einer vertikalen Achse ZZ' und in ihrem oberen Bereich offen ist.

4. Modulare Ultrafiltrationsvorrichtung nach Anspruch 3,
dadurch gekennzeichnet, daß die Pumpe (25) einen Hebering (32) zum Heben oder Abstellen der Einheit aufweist, die auf dem Flansch (9) der Hülle (8) des Ultrafilters (15) ruht.

5. Modulare Ultrafiltrationsvorrichtung nach einem der Ansprüche 3 und 4, ·
dadurch gekennzeichnet, daß der abnehmbare Deckel (7) des Behälters (1) zu den Befestigungsorganen der Flansche (26 und 9) vertikal verlaufende Öffnungen (29) aufweist.

6. Modulare Ultrafiltrationsvorrichtung nach Anspruch 1,
dadurch gekennzeichnet, daß der Behälter (1) Heberinge (31) für dessen Transport und dessen Plazierung als Ganzes im Reaktor aufweist.

7. Modulare Ultrafiltrationsvorrichtung nach Anspruch 1,
dadurch gekennzeichnet, daß der Ultrafilter (15) Führungswände (21, 22) für das Konzentrat und das Filtrat im Inneren der Hülle (8) und im Inneren der Ultrafiltrationseinheit (10) aufweist.

**Claims**

1. Modular ultrafiltration device for the high-temperature and high-pressure cooling liquid of a nuclear reactor, characterised in that it comprises:
- a containment (1), the walls (2) of which are made of a material absorbing radiation and which incorporates a removable cover (7),
- an ultrafilter (15) which is arranged inside the containment (1) and has a pressure-resistant casing (8) open at one of its ends (8a) provided with a connecting flange (9), and which contains a removable ultrafiltration assembly (10) which can be introduced or removed via the opening in the casing (8), and an inlet pipe (12) for liquid to be purified, a filtrate outlet pipe (16) and
- a concentrate outlet pipe (14) passing through the pressure-resistant casing (8),
- a concentrate circulation pump (25) fastened to the removable cover (7) of the containment (1) and incorporating a connecting flange (26) matching the connecting flange (9) of the pressure-resistant casing (8), to form together with this casing (8), when the removable cover (7) and the pump (25) are in the operating position, a closed and leakproof volume in which the concentrate is made to circulate by means of the pump (25),
- a heat exchanged (132) placed in the containment (1) and connected to the concentrate outlet pipe (14) penetrating into the heat exchanged (132) cooling the concetrate, as well as to a discharge pipe (35) for the cooled concentrate and to an inlet pipe (37) and an outlet pipe (39) for cooling fluid,
- connection means (13, 17, 36, 38, 40) fixed respectively to the inlet pipe (12) for liquid to be purified, to the filtrate outlet pipe (16), to the concentrate discharge pipe (35) and to the inlet and outlet pipes (37, 39) for cooling fluid, outside the containment (1), these pipes passing through the walls (2) of the containment in a leak-proof manner,
- and a heat-insulating material (41) in divided form which fills the free volume of the containment (1).

2. Modular device according to claim 1, characterised in that beams (50) are arranged radially between the casing (8) of the ultrafilter (15) and the inner wall of the containment (1), to absorb forces which can arise under accident conditions.

3. Modular device according to either one of claims 1 and 2, characterised in that the casing (8) of the ultra-filter (15) is a substantially cylindrical shape with a vertical axis ZZ' and is open in its upper part.

4. Modular device according to claim 3, characterised in that the pump (25) has a lifting ring (32) for lifting or putting down the assembly resting on the flange (9) of the casing (8) of the ultrafilter (15).

5. Modular device according to either one of claims 3 and 4, characterised in that the removable cover (7) of the containment (1) has holes (29) in a vertical line with means for fastening the flanges (26 and 9) to one another.

6. Modular device according to claim 1 characterised in that the containment (1) incorporates lifting rings (31) for transporting it and installing it in the reactor as a single unit.

7. Modular device according to claim 1 characterised in that the ultrafilter (15) incorporates partitions (21, 22) for guiding the concentrate and the filtrate inside the casing (8) and inside the ultrafiltration assembly (10) respectively.

0 203 861